# EUROPEAN PATENT APPLICATION

(11) **EP 4 822 251 A1**
(43) Date of publication of application: **14.10.2026**
(21) Application number: 25222757.4
(22) Date of filing: 11.12.2025
(51) Int. Cl.: F21V 8/00

(54) **LIGHT GUIDE FILM ASSEMBLY, FRONT LIGHT MODULE, AND REFLECTIVE DISPLAY DEVICE**

(30) Priority: 10.04.2025 CN 202510447627
(71) Applicant: Dalian Situne Technology Co., Ltd, Dalian City, Liaoning Province 116023 (CN)
(72) Inventor: PAN, JONG-GUANG, Dalian City, Liaoning Province, 116032 (CN)
(74) Representative: Cabinet Chaillot

(57) **Abstract**

A light guide film assembly, including a peripheral layer, a core layer, and light guide blocks on the lower surface of the core layer facing towards a reflective display module. The light guide blocks are designed based on the optimal surface inclination angle, such that their structure and density enable the incident light to be refracted out from side surfaces of the light guide blocks without undergoing total internal reflection, and then projected onto the pixels of the reflective display module to form pixel lights of correct grayscale. Alternatively, the incident light undergoes total internal reflection within the light guide blocks and is reflected out from the bottom surfaces of the light guide blocks, after which the pixel lights are entirely transmitted out of the core layer at an angle most parallel to a perpendicular direction of the core layer to enter the user's eyes.

## Description

### TECHNICAL FIELD

The present invention belongs to the field of display technology, and specifically relates to a light guide film assembly, a front light module, and a reflective display device.

### BACKGROUND OF THE INVENTION

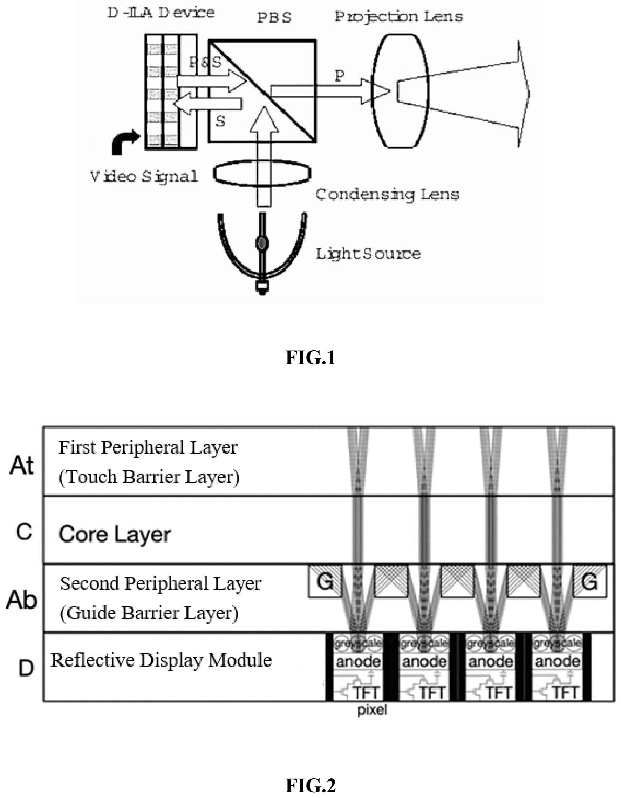

Display devices such as liquid crystal display screens (reflective RLCD or transmissive LCD), projectors (reflective LCoS (Liquid Crystal on Silicon) or DLP), and electronic ink screens (E-ink^{®} or CLEARink^{®}) are not self-luminous. Instead, they require an external light source to transmit through liquid crystal screen pixels of specific shielding ratios or be reflected by electronic ink of specific proportions of particles per unit area to form spatial light rays which are then transmitted or reflected to the user who as a result perceives an image with correct grayscale color shown in each pixel. An optical structure of light guide projection of LCoS combines reflective liquid crystal modulation with efficient optical design. The essence of LCoS lies in guiding a light source to an LCoS chip and collecting the modulated reflected light for projection, as shown in FIG. 1. A light guide plate in a traditional display device uses a polarizing beam splitter prism. In latest researches, it is intended to use a total internal reflection light guide principle similar to that in optical communication to provide a more efficient light source for use by the display device.

Splitting and Polarization Control: A Polarizing Beam Splitter (PBS) utilizes polarization selectivity to separate incident light and reflected light. PBS allows light of a specific polarization direction (e.g., P-polarization) to be transmitted and illuminate the LCoS chip. The reflected light, having its polarization changed by the liquid crystal modulation (e.g., to S-polarization), is reflected by the PBS towards the projection lens (resulting in light loss). This structure requires changing polarization and splitting the beam, and the general light efficiency does not exceed 25%.

Total Internal Reflection Optical Communication: In recent years, many companies have begun to discuss how to use the principles of fiber optic cable communication to create light guide plates. This is because total internal reflection communication principle uses refractive indices of different materials to meet different light guiding requirements, without the need to change polarization or to split the beam. Therefore, it is theoretically possible to achieve a very efficient light guide technology. A fiber optic cable includes a core and a cladding. The core has a higher refractive index and is typically made of high-quality silica glass, although thermoplastic polymers such as polymethyl methacrylate (PMMA), cyclic olefin copolymer (COC), or polycarbonate (PC) are now also used to make the core. The second major advantage is that optical communication materials can be made ultra-thin and rollable, thus enabling non-flat or curved reflective or transmissive screens. However, the refractive indices and total internal reflection principle of optical cable communication have not yet been practically used for mass production of a light guide plate. Prior published patents and patent applications for light guide plates use two different refractive indices to ensure that a coupled light source transmits light through total internal reflection, and then additional light guide blocks are used to guide the light. Therefore, an existing laboratory light guide plate includes at least a core layer and light guide blocks, but it is generally defective in the following aspects:
1. Color interference between pixels: Apart from a few patents and literatures discussing this kind of light guide plate, no patents or literatures have ever explained in detail how to select the refractive indices for different materials, or how to control a slanted surface light guide angle or inclination angle and corresponding dimensions of a light guide block. As a result, a light guide plate produced in laboratory will usually generate irregular and non-uniform scattered light. When the light reflected back from the display screen is guided back into the core layer, it undergoes total internal reflection again, causing the grayscale colors of adjacent pixels to interfere with each other. Ultimately, the light efficiency of the light that can be transmitted to the user is very low.
2. Pixel density is too low: In existing light guide plate patents, density of the light guide blocks does not match with that of the pixels. In many light guide plates patents, light guide blocks are arranged at a lower density in the region near the light source, and the density of the light guide blocks increases with increasing distance from the light source, due to the concern that too much light will be guided out near the light source, while too little light will be guided out far from the light source, thus causing the problem of non-uniform light guiding. However, the fundamental reason for non-uniform light guiding in a light guide plate is in fact the failure to properly control a light guiding angle of the incident light, such that after most of the light is refracted by the light guide blocks to the pixels of the display screen, the reflected light returns to the light guide blocks again. The light reflected back to the light guide blocks is refracted back into the core layer and continues to undergo total internal reflection, thereby interfering with the grayscale colors of other pixels. The visible light spectrum from blue to red is 400 to 700 nanometers. Therefore, the structural size of a light guide block cannot be smaller than twice the wavelength of the spectrum, meaning that it cannot be smaller than 1.5 micrometers, otherwise the structure of the light guide block itself will affect the color display. Assuming that a matrix of light guide blocks requires at least 5x5=25 microstructures (light guide blocks) to correspond to one single pixel, then each pixel of the reflective display device cannot be smaller than 1.5x5x4 times, or 30 micrometers, meaning that the pixel density will be very low. For example, if a color pixel has three sub-pixels (red, green, and blue), and if each sub-pixel cannot be smaller than 30 micrometers, then the resolution or pixel density of the entire screen would only be 278 PPI, which is equivalent to half the density of current prior art mobile phone screens. Such a low resolution is also why this type of light guide plate can only be used on electronic ink display screens with very low pixel counts. Since micro-displays require at least 1000 PPI, a light guide plate with such a structure cannot be used on micro-displays or projectors.
3. Refraction angle is flat: The transmission and reflection angles of current light guide plate patents are too flat. According to the Fresnel equations, it is known that the larger the angle of incidence of light at an interface (i.e., the flatter the angle), the greater the reflectivity, and therefore the smaller the transmissivity. All reflected light is light loss. In other words, the smaller the transmissivity, the greater the light loss. This is why the light efficiency of prior art reflective display screens is below 50%, or can even be as low as 20%.

### BRIEF SUMMARY OF THE INVENTION

An object of the present invention is to provide a rollable light guide film assembly suitable for mass production and that achieves ultra-high light efficiency. A front light module and a reflective display device comprising said light guide film assembly are also disclosed.

A light guide film assembly, comprising a core layer, light guide blocks, and a peripheral layer; a refractive index *n_{C}* of the core layer is higher than a refractive index *n_{A}* of the peripheral layer; an angle of an incident light comprising a plurality of light rays propagating within the core layer, which is an angle of incidence *θ*_{*CA*1} of the incident light transmitting from the core layer to the peripheral layer, exceeds a critical angle *θ_{CA}* of the incident light transmitting from the core layer to the peripheral layer, such that the incident light propagating within the core layer undergoes total internal reflection within the core layer, and the core layer acts as a transmission medium to propagate the incident light away from where the incident light comes from, while during propagation, if the incident light is transmitted from the core layer to an interface between any one of the light guide blocks and the core layer, the incident light propagates into that light guide block through the interface, and if not transmitted to said interface, the incident light continues to propagate within the core layer due to said total internal reflection; the peripheral layer is formed by sub-layers comprising a first peripheral layer on a surface of the core layer facing oppositely away from a reflective display module, and a second peripheral layer on a surface of the core layer facing towards the reflective display module; the peripheral layer surrounds or serving as outer layers of a stacked structure formed by the core layer and the light guide blocks;

the light guide blocks are arranged in a matrix with a preset density on a lower surface of the core layer facing towards the reflective display module; the light guide blocks have a structure and density that enable the incident light to be refracted to the light guide blocks, from the light guide blocks to the second peripheral layer, and then projected onto pixels of the reflective display module to form pixel lights of correct grayscales; the pixel lights, after being reflected by the reflective display module, are entirely transmitted out of the core layer at a direction perpendicular to the core layer to enter a user's eyes;

depending on three scenarios where the refractive index *n_{C}* of the core layer is higher than, lower than, and equal to a refractive index *n_{G}* of the light guide blocks, the structure of the light guide blocks is designed, and a surface inclination angle of each slanted surface of each of the light guide blocks as well as a density of the light guide blocks are selected, such that the incident light refracted to the light guide blocks from the core layer do not undergo total internal reflection within the light guide blocks but being refracted out from side surfaces of the light guide blocks and then projected onto the pixels of the reflective display module to form the pixel lights of correct grayscales, and the pixel lights, after being reflected by the reflective display module, avoid being transmitted through the light guide blocks and then being entirely transmitted out of the core layer at the direction perpendicular to the core layer to enter the user's eyes.

Preferably, the structure of the light guide blocks are designed according to the following steps:
Step 1: known are the refractive index *n_{C}* of the core layer, the refractive index *n_{G}* of the light guide blocks, a refractive index *n_{At}* of the first peripheral layer, and a refractive index *n_{Ab}* of the second peripheral layer; using a higher one of the refractive index *n_{At}* and the refractive index *n_{Ab}* to calculate the critical angle *θ_{CA}* for total internal reflection within the core layer, and utilizing the critical angle *θ_{CA}* to determine a range of angles of incidence *θ*_{*CA*1} by which the incident light entering the core layer undergoes total internal reflection within the core layer;
Step 2: calculating a range of angles of incidence *θ*_{*CG*1} for the incident light transmitting from the core layer into the light guide blocks using a formula for angle of transmission ${θ}_{2} = {sin}^{- 1} \left(\frac{{n}_{1}}{{n}_{2}}sin {θ}_{1}\right)$ based on the range of angles of incidence *θ*_{*AC*1} calculated in Step 1; if the refractive index *n_{C}* of the core layer is higher than the refractive index *n_{G}* of the light guide blocks, the range of angles of incidence *θ*_{*CG*1} has to be adjusted to be lower than a critical angle *θ_{CG}* and higher than the critical angle *θ_{CA}*;
Step 3: calculating an angle of transmission *θ*_{*CG*2} based on the range of angles of incidence *θ*_{*CG*1} obtained in step 2 by using the formula for angle of transmission, calculating, for each of the light guide blocks, different angles of transmission θ_{GAb2} for the light rays transmitting into the second peripheral layer from a respective light guide block through i number of different possible slanted surfaces of the respective light guide block ranging from a slanted surface having a minimal surface inclination angle *O_{face}* to a slanted surface having a maximum surface inclination angle *O_{face}*, and then selecting among said i number of different possible slanted surfaces a slanted surface that has an optimal surface inclination angle *O_{face}* to configure the light guide blocks, wherein said optimal surface inclination angle *O_{face}* is a surface inclination angle *O_{face}* that enables the light rays transmitted from the core layer into the respective light guide block to be guided to the pixels of the reflective display module after being refracted without undergoing total internal reflection within the respective light guide block, and enables the light rays subsequently reflected by the reflective display module be reflected in a direction most parallel to a perpendicular direction with respect to the core layer and are not reflected back to the respective light guide block; also adjusting the density of the light guide blocks so that the light rays reflected by the reflective display module avoid transmitting through the light guide blocks; also, configuring a height and a width of each of the light guide blocks such that the light rays transmitted from the core layer into the light guide blocks are refracted out of the light guide blocks and projected to the pixels of the reflective display module after being refracted by the light guide blocks without undergoing total internal reflection within the light guide blocks.

Preferably, Step 3 specifically comprises the following steps:
Step 31: Said step of "calculating, for each of the light guide blocks, different angles of transmission θ_{GAb2} for the light rays transmitting into the second peripheral layer from the respective light guide block through said i number of different possible slanted surfaces of the respective light guide block ranging from the slanted surface having the minimal surface inclination angle *O_{face}* to the slanted surface having the maximum surface inclination angle *O_{face}*" of step 3 comprises the following steps: let the slanted surface having the minimal surface inclination angle *O_{face}* be a slanted surface parallel to the lower surface of the core layer, and let the slanted surface having the maximum surface inclination angle *O_{face}* be a slanted surface that is perpendicular to the lower surface of the core layer, so that surface inclination angles *O_{face}* of said i number of different possible slanted surfaces of the respective light guide block range from 0 degree to 90 degrees; calculating, for each of said i number of different possible slanted surfaces of each of the light guide blocks G, an adjusted angle of incidence ${θ}_{GAb 1}^{′}$ from the respective light guide block G to the second peripheral layer Ab according to the following:
   ${θ}_{GAb 1}^{′} = {θ}_{GAb 1} - {θ}_{facei}$ (4)
   wherein, *θ*_{*GAb*1} = *θ*_{*CG*2}, and *θ_{facei}* represents a surface inclination angle of an i^{th} possible slanted surface of the respective light guide block G;
   then using the formula for angle of transmission to calculate an angle of transmission ${θ}_{GAb 2}^{′}$ of the light rays in the second peripheral layer Ab transmitted through that i^{th} possible slanted surface; lastly, adjusting ${θ}_{GAb 2}^{′}$ back to an angle of transmission θ_{GAb2} which is perpendicular to the lower surface of the core layer using formula (4), wherein ${θ}_{GAb 2} = {θ}_{GAb 2}^{′} + {θ}_{facei}$;

Said step of "selecting among said i number of different possible slanted surfaces the slanted surface that has an optimal surface inclination angle *O_{face}* to configure the light guide blocks, wherein said optimal surface inclination angle *O_{face}* is the surface inclination angle *O_{face}* that enables the light rays transmitted from the core layer into the respective light guide block to be guided to the pixels of the reflective display module after being refracted without undergoing total internal reflection within the respective light guide block" of step 3 comprises the following steps:
calculating a first range of surface inclination angles *O_{face}* that causes total internal reflection within the respective light guide block as a first category of surface inclination angles, and exclude said first range of surface inclination angles, so that a second range of surface inclination angles is obtained which does not cause total internal reflection within the respective light guide block, and this second range of surface inclination angles is considered a second category of surface inclination angles;
Step 32: selecting from the second category of surface inclination angles a third category of surface inclination angles that does not only prevent total internal reflection within the respective light guide block, but also enable the light rays refracted by the respective light guide block to be projected onto the reflective display module; and then selecting among the third category of surface inclination angles the optimal surface inclination angle that enables the light rays subsequently reflected by the reflective display module be reflected in the direction most parallel to the perpendicular direction with respect to the core layer and not being reflected back to the respective light guide block.
Step 33: calculating an angle of transmission *θ*_{*AbC*2} for the light rays transmitting from the second peripheral layer into the core layer:
   calculating a position of each of the light rays at the core layer as being subsequently reflected from the reflective display module by using trigonometrical calculation based on a height between a position on the light guide block where the light ray is refracted out of the light guide block and a surface of the reflective display module reflecting the light ray; using the formula for angle of transmission to calculate the angle of transmission *θ*_{*AbC*2} for each of the light rays transmitting from the second peripheral layer into the core layer;
   Step 34: using the formula for angle of transmission to calculate an angle of transmission for the light rays transmitting to the first peripheral layer from the core layer, and such angle of transmission for the light rays transmitting to the first peripheral layer from the core layer as obtained is then used to calculate an angle which the pixel lights reflected by the reflective display module reach the user's eyes, ensuring that the light rays transmitted from the core layer is transmitted into the first peripheral layer at an angle of incidence most parallel to a perpendicular direction with respect to an upper surface of the core layer.

A light guide film assembly, comprising a core layer, light guide blocks, and a peripheral layer; a refractive index *n_{C}* of the core layer is higher than a refractive index *n_{A}* of the peripheral layer; an angle of an incident light comprising a plurality of light rays propagating within the core layer, which is an angle of incidence *θ*_{*CA*1} of the incident light transmitting from the core layer to the peripheral layer, exceeds a critical angle *θ_{CA}* of the incident light transmitting from the core layer to the peripheral layer, such that the incident light propagating within the core layer undergoes total internal reflection within the core layer, and the core layer acts as a transmission medium to propagate the incident light away from where the incident light comes from, while during propagation, if the incident light is transmitted from the core layer to an interface between any one of the light guide blocks and the core layer, the incident light propagates into that light guide block through the interface, and if not transmitted to said interface, the incident light continues to propagate within the core layer due to said total internal reflection; the peripheral layer is formed by sub-layers comprising a first peripheral layer on an upper surface of the core layer facing oppositely away from a reflective display module, and a second peripheral layer on a lower surface of the core layer facing towards the reflective display module; the peripheral layer surrounds or serving as outer layers of a stacked structure formed by the core layer and the light guide blocks;
depending on three scenarios where the refractive index *n_{C}* of the core layer is higher than, lower than, and equal to a refractive index *n_{G}* of the light guide blocks, a structure of the light guide blocks is designed, and a surface inclination angle of each slanted surface of each of the light guide blocks as well as a density of the light guide blocks are selected, such that the light rays of the incident light transmitting to the light guide blocks undergo total internal reflection within the light guide blocks and then being directed out from bottom surfaces of the light guide blocks and then projected onto pixels of the reflective display module to form pixel lights of correct grayscales; all the pixel lights, after being reflected by the reflective display module, are reflected back to the light guide blocks or avoid being reflected back to the light guide blocks, and then transmit out through the core layer to a user's eyes.

Preferably, the structure of the light guide blocks are designed according to the following steps:
Step 1: known are the refractive index *n_{C}* of the core layer, the refractive index *n_{G}* of the light guide blocks, a refractive index *n_{At}* of the first peripheral layer, and a refractive index *n_{Ab}* of the second peripheral layer, utilizing a higher one of the refractive index *n_{At}* and the refractive index *n_{Ab}* to calculate the critical angle *θ_{CA}* for total internal reflection within the core layer, and utilizing the critical angle *θ_{CA}* to determine a range of angles of incidence *θ*_{*AC*1} by which the incident light entering the core layer undergoes total internal reflection within the core layer;
Step 2: based on the range of angles of incidence *θ*_{*AC*1} obtained from Step 1, if the refractive index *n_{C}* of the core layer and the refractive index *n_{G}* of the light guide blocks are different, calculate a range of angles of incidence *θ*_{*CG*1} for the incident light transmitting from the core layer into the light guide block using a formula for angle of transmission ${θ}_{2} = {sin}^{- 1} \left(\frac{{n}_{1}}{{n}_{2}}sin {θ}_{1}\right)$; if the refractive index *n_{C}* of the core layer and the refractive index *n_{G}* of the light guide blocks are equal, then${θ}_{AC 1 } = {θ}_{AC 2} = {θ}_{CG 1} = {θ}_{CG 2} = {θ}_{GAb 1}$
Step 3: given the bottom surfaces of the light guide blocks are parallel to the lower surface of the core layer, calculating, for each of the light guide blocks, different angles of transmission θ_{GAb2} for the light rays transmitting into the second peripheral layer from a respective light guide block through i number of other different possible slanted surfaces of the respective light guide block apart from a bottom surface of the respective light guide block, where said i number of other different possible slanted surfaces range from a slanted surface having a minimal surface inclination angle *O_{face}* to a slanted surface having a maximum surface inclination angle *θ_{face}*, and then selecting among said i number of other different possible slanted surfaces a slanted surface that has an optimal surface inclination angle *O_{face}* to configure the light guide blocks, wherein said optimal surface inclination angle *O_{face}* is a surface inclination angle *O_{face}* that enables the light rays transmitted from the core layer into the respective light guide block to first undergo total internal reflection on said slanted surface that has the optimal surface inclination angle, and then be refracted by the bottom surface of the respective light guide block to the pixels of the reflective display module, and enables the light rays subsequently reflected by the reflective display module be reflected in a direction most parallel to a perpendicular direction with respect to the core layer and not being reflected back to the respective light guide block, wherein the light rays subsequently reflected by the reflective display module into the core layer without reflecting back to the respective light guide block are eventually refracted into the first peripheral layer; also adjusting the density of the light guide blocks so that the light rays reflected by the reflective display module entirely enter back into the light guide blocks or entirely avoid the light guide blocks.

Preferably, Step 3 comprises the following steps:
Step 31: said step of "calculating, for each of the light guide blocks, different angles of transmission θ_{GAb2} for the light rays transmitting into the second peripheral layer from the respective light guide block through said i number of other different possible slanted surfaces of the respective light guide block apart from the bottom surface of the respective light guide block, where said i number of other different possible slanted surfaces range from the slanted surface having the minimal surface inclination angle *O_{face}* to the slanted surface having the maximum surface inclination angle *O_{face}*" of step 3 comprises the following steps: let the slanted surface having the minimal surface inclination angle *O_{face}* be a slanted surface parallel to the lower surface of the core layer, and let the slanted surface having the maximum surface inclination angle *O_{face}* be a slanted surface that is substantially perpendicular to the lower surface of the core layer; selecting slanted surface inclination angles *O_{face}* ranging from 45 degrees to 180 degrees; calculating among selected slanted surface inclination angles *O_{face}* ranging from 45 degrees to 180 degrees a range of slanted surface inclination angles that causes total internal reflection within the respective light guide block as a fourth category of surface inclination angles;
known are the range of angles of incidence *θ*_{*AC*1} and the fourth category of surface inclination angles, calculating an angle of transmission *θ*_{*CG*2} by using the formula for angle of transmission; also calculating, for each of said i number of other different possible slanted surfaces of each of the light guide blocks apart from the bottom surface thereof, an adjusted angle of incidence ${θ}_{GAb 1}^{′}$ from each of the light guide blocks to the second peripheral layer according to the following:
   ${θ}_{GAb 1}^{′} = {θ}_{GAb 1} - {θ}_{facei}$ (4)
wherein, *θ*_{*GAb*1} = *θ*_{*CG*2}, and *θ_{facei}* represents a surface inclination angle of an i^{th} possible slanted surface of the respective light guide block;
then using the formula for angle of transmission to calculate an angle of transmission ${θ}_{GAb 2}^{′}$ of the light rays in the second peripheral layer transmitted through the bottom surface of the respective light guide block; lastly, adjusting ${θ}_{GAb 2}^{′}$ back to an angle of transmission θ_{GAb2} which is substantially perpendicular to the lower surface of the core layer C using formula (4), wherein ${θ}_{GAb 2} = {θ}_{GAb 2}^{′} + {θ}_{facei}$;
since the bottom surface of the respective light guide block is parallel to the lower surface of the core layer, instead of adjusting a slanted surface inclination angle, formula (4) is directly used to calculate the angle of transmission θ_{GAb2} from the respective light guide block into the second peripheral layer;
Step 32: selecting from the fourth category of surface inclination angles obtained from Step 31 a fifth category of surface inclination angles that does not only enable total internal reflection within the light guide blocks, but also enable light rays refracted from bottom surfaces of the light guide blocks be projected onto the reflective display module; and then selecting among the fifth category of surface inclination angles the optimal surface inclination angle that enables the light rays subsequently reflected by the reflective display module be reflected in the direction most parallel to the perpendicular direction with respect to the core layer and not being reflected back to the light guide blocks; wherein the light rays subsequently reflected by the reflective display module into the core layer without reflecting back to the light guide blocks are eventually refracted into the first peripheral layer.
Step 33: calculating an angle of transmission *θ*_{*AbC*2} for the light rays transmitting from the second peripheral layer directly into the core layer, or from the second peripheral layer into the core layer after passing through the respective light guide block:
   configuring the light guide blocks based on the optimal surface inclination angle; also, a height and a width of each of the light guide blocks are configured such that the incident light transmitted from the core layer into the light guide blocks is reflected by the light guide blocks due to total internal reflection and be guided to the pixels of the reflective display module through the bottom surfaces of the light guide blocks;
   calculating a position of each of the light rays at the core layer directly reflected by the reflective display module or reflected by the reflective display module and passing through the respective light guide block by using trigonometrical calculation based on a height between a position on the respective light guide block where the light ray is reflected by the respective light guide block and a surface of the reflective display module reflecting the light ray; using the formula for angle of transmission to calculate an angle of transmission *θ*_{*AbC*2} for the light ray transmitting from the second peripheral layer directly into the core layer or angles of transmission for the light ray transmitting from the second peripheral layer into the core layer after passing through the respective light guide block, including an angle of transmission *θ*_{*AbG*2}*,* which is also an angle of incidence *θ*_{*GC*1}, and also an angle of transmission *θ*_{*GC*2}*.*
Step 34: using the formula for angle of transmission to calculate an angle of transmission for the light rays transmitting to the first peripheral layer from the core layer, and such angle of transmission for the light rays transmitting to the first peripheral layer from the core layer as obtained is then used to calculate an angle which the pixel lights reflected by the reflective display module reach the user's eyes, ensuring that the light rays transmitted from the core layer is transmitted into the first peripheral layer at an angle of incidence most parallel to a perpendicular direction with respect to an upper surface of the core layer.

A front light module, comprising: a light source and the light guide film assembly as described above; the light source is disposed at a light-incident surface of the light guide film assembly; the incident light from the light source enters the core layer of the light guide film assembly from said light-incident surface.

A reflective display device, comprising: a reflective display module and the front light module as described above; the front light module is disposed on an outer side of a display surface of said reflective display module, and the light guide blocks face towards the reflective display module.

The present invention discloses a light guide film assembly comprising a peripheral layer, a core layer, and light guide blocks. An incident light of a light source is coupled into the core layer at a preset angle. The incident light propagates within the core layer by total internal reflection away from the light source, while during propagation, if the incident light is transmitted from the core layer to an interface between any one of the light guide blocks and the core layer, the incident light propagates into that light guide block through the interface, and if not transmitted to said interface, the incident light continues to propagate within the core layer due to said total internal reflection. The light guide blocks are designed based on the optimal surface inclination angle, and are arranged in a matrix with a preset density on the lower surface of the core layer facing towards a reflective display module. The structure and density of the light guide blocks must enable the incident light to be refracted out from the side surfaces of the light guide blocks without undergoing total internal reflection within the light guide blocks, and then projected onto the pixels of the reflective display module to form pixel lights of correct grayscale. Alternatively, the incident light undergoes total internal reflection on the inner side surfaces of the light guide blocks and is reflected out from the bottom surfaces of the light guide blocks, after which the pixel lights are entirely transmitted out of the core layer at an angle most parallel to a perpendicular direction of the core layer to enter the user's eyes.

The present invention controls the angles of all transmitted light rays, making the adjusted reflected light rays very perpendicular. Because the smaller the angle of incidence of light ray, the lesser the light loss, the present invention is basically free of any interface reflection or light loss. Therefore, the light efficiency of the light guide film assembly of the present invention is higher.

The present invention is different from conventional optics in that: the present invention does not need to use polarization technology to separate the light source or split the beam, so it produces almost no light loss. All the light rays are used in the process of refraction, reflection, and transmission until they reach the user's eyes. Because the present invention design the light guide blocks based on optimal surface inclination angle, the pixel lights, after being reflected by the reflective display module, is transmitted out of the core layer at an angle most parallel to a perpendicular direction of the core layer. This solves the three major problems of pixel light color mixing, low pixel density, and flat refraction angles, making the light guide film assembly of the present invention mass-producible, ultra-high in light efficiency, and rollable, thus having high application value.

### BRIEF DESCRIPTION OF THE DRAWINGS

FIG. 1 is a schematic diagram of light paths in a LCoS optical structure of a conventional display device;
FIG. 2 is a cross-sectional view of the light guide film assembly of the present invention applied to a reflective display device;
FIG. 3 is a schematic diagram of light paths in the light guide film assembly of the present invention when *n_{C}* < n*_{G}*, wherein light rays entering the light guide blocks do not undergo total internal reflection and are being refracted out from side surfaces of the light guide blocks;
FIG. 4 is a schematic diagram of light paths in the light guide film assembly of the present invention when *n_{C}* > n*_{G}*, wherein light rays entering the light guide blocks do not undergo total internal reflection and are being refracted out from side surfaces of the light guide blocks;
FIG. 5 is a schematic diagram of a light path of a light ray transmitting from the core layer C into a light guide block G in the light guide film assembly according to the present invention when *n_{C}* > n*_{G}*;
FIG. 6 is a schematic diagram of a light path of a light ray transmitting from the core layer C into a light guide block G in the light guide film assembly according to the present invention when *n_{C}* < n*_{G}*;
FIG. 7 is a schematic diagram of light paths in the light guide film assembly according to the present invention when *n_{C}* = n*_{G}*, wherein light rays transmit from the core layer C into the light guide blocks G where the light rays undergoes total internal reflection within the light guide blocks G and is refracted out from the bottom surfaces of the light guide blocks G to a reflective display from which the light rays are then entirely reflected back into the light guide blocks G;
FIG. 8 is a schematic diagram of light paths in the light guide film assembly according to the present invention when *n_{C}* = n*_{G}*, wherein light rays transmit from the core layer C into the light guide blocks G where the light rays undergoes total internal reflection within the light guide blocks G and is t refracted out from the bottom surfaces of the light guide blocks G to a reflective display from which the light rays are then reflected back to the core layer C avoiding all the light guide blocks G.

### DETAILED DESCRIPTION OF THE INVENTION

The technical solutions in the embodiments of the present application will be clearly and completely described below with reference to the accompanying drawings in the embodiments of the present application. Obviously, the described embodiments are only some but not all of the embodiments of the present application. Based on the embodiments in the present application, all other embodiments obtainable by a person of ordinary skill in the art without inventive effort shall fall within the protection scope of the present application.

It should be noted that terms such as "first" and "second" in the description, claims, and drawings of this application are only intended to distinguish similar objects, but not intended to describe a specific order or sequence. It should be understood that the numbers used can be interchanged under appropriate circumstances so that the embodiments of the present application described herein can be implemented in an order other than those illustrated or described herein. In addition, the terms "comprising", "having", and any variations thereof are intended to cover non-exclusive inclusion, for example, a process, method, system, product, or server that comprises a series of steps or units is not necessarily limited to those steps or units clearly listed, but may include other steps or units not clearly listed or inherent to such processes, methods, products, or devices.

In the embodiments of the present application, words such as "exemplary" or "for example" are used to mean an example, an instance, or an illustration. Any embodiment or scheme described as "exemplary" or "for example" in the embodiments of the present application should not be construed as being more preferred or advantageous than other embodiments or schemes. To be precise, the use of words such as "exemplary" or "for example" is intended to elaborate relevant concepts in a concrete manner.

### Principle of the Invention:

The subscripts for the present invention are defined as follows: let the angle of incidence be *θ*₁, the angle of transmission be *θ*₂, and the critical angle is simply denoted as *θ* without any subscript. As shown in FIG. 2, the light guide film assembly of the present invention comprises a core layer C configured for light transmission, light guide blocks G, and a peripheral layer A (which is formed by two sub-layers At and Ab as will be described in detail below); refractive indices of the core layer C, each of the light guide blocks G, and the peripheral layer A are *n_{C}*, *n_{G}*, and *n_{A}* respectively. If a light ray enters the core layer C from the peripheral layer A, a corresponding angle of incidence is denoted as *θ*_{*AC*1}*,* and a corresponding angle of transmission is denoted as *θ*_{*AC*2}, and the critical angle of the light ray propagating from the core layer C to a corresponding light guide block G is denoted as *θ_{CG}*, wherein a sequence of the letter subscripts corresponds to a direction of light propagation (applicable as well to other directions of light propagation between otherwise different layers and components as may be mentioned below).

According to Snell's Law, when a light ray is transmitted through an interface between two different media (with refractive indices *n*₁ and *n*₂ respectively) from one of said two different media to another one of said two different media, the angle of incidence *θ*₁ and the angle of transmission *θ*₂ satisfy the following relationship:
${n}_{1} sin {θ}_{1} = {n}_{2} sin {θ}_{2}$ (1); wherein
a formula for angle of transmission is:${θ}_{2} = {sin}^{- 1} \left(\frac{{n}_{1}}{{n}_{2}}{sinθ}_{1}\right)$ (2);
when a light ray enters a medium with a higher refractive index from a medium with a lower refractive index (*n*₂ > *n*₁), the angle of transmission *θ*₂ is smaller than the angle of incidence *θ*₁, and the light ray bends towards the normal line. Conversely, when a light ray enters a medium with a lower refractive index from a medium with a higher refractive index (*n*₂ < *n*₁), the angle of transmission *θ*₂ is larger than the angle of incidence *θ*₁, and the light ray bends away from the normal line. When a light ray enters a medium with a lower refractive index from a medium with a higher refractive index, and the angle of incidence *θ*₁ exceeds the critical angle *θ*, the light ray will be totally reflected internally back to the medium with the higher refractive index and will not transmit out to the medium with the lower refractive index. The formula for the critical angle *θ* is:
   $θ = {sin}^{- 1} \frac{{n}_{2}}{{n}_{1}} , wherein {n}_{2} < {n}_{1}$ (3).

### Embodiment 1

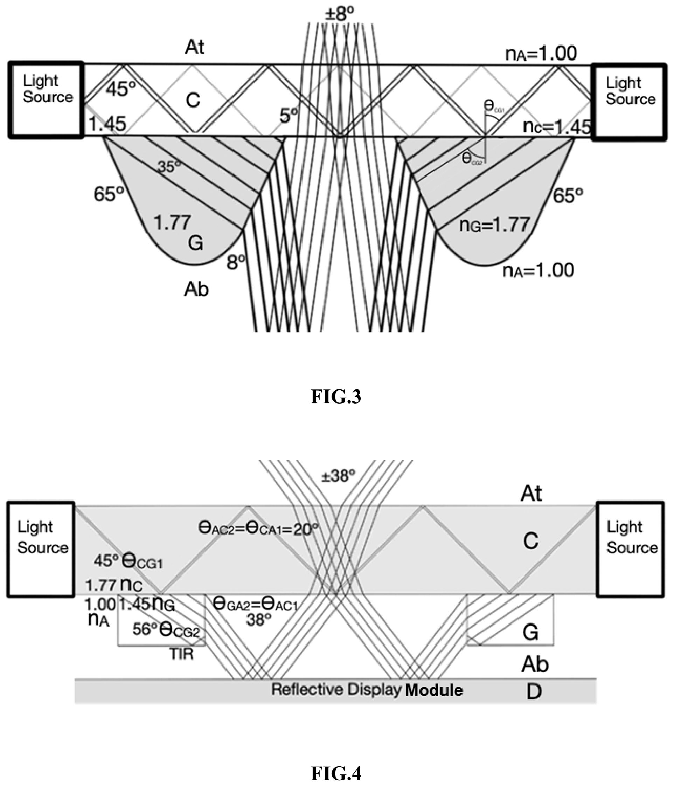

Embodiment 1 of the present invention provides a light guide film assembly, comprising a core layer C, light guide blocks G, and a peripheral layer A. In the illustrations shown in FIGs. 3 and 4, the refractive index *n_{C}* of the core layer C should be higher than the refractive index *n_{A}* of the peripheral layer A. When a light ray of a side-lighting light source from one side of the core layer C enters the core layer C according to a preset angle, the angle of transmission of the light ray within the core layer C with respect to the light source (i.e., the angle of incidence from the core layer C to the peripheral layer A, denoted as *θ*_{*CA*1}) should exceed the critical angle *θ_{CA}* of the light ray transmitting from the core layer C to the peripheral layer A. Accordingly, based on the well-known total internal reflection theory in the prior art technologies such as optical cable communication transmission, the incident light ray will undergo total internal reflection within the core layer C, and hence the core layer C acts as a transmission medium to propagate the incident light ray away from the light source, while during propagation, if the light ray is transmitted from the core layer C to an interface between one of the light guide blocks G and the core layer C, the light ray will propagate into that light guide block G through the interface. It is understood that the light source may have a plurality of light rays such that some of them will continue to propagate within the core layer C, while some of them will enter into different light guide blocks G during propagation. The peripheral layer A is formed by sub-layers comprising a first peripheral layer At on a surface of the core layer C facing oppositely away from a reflective display module D, and a second peripheral layer Ab on a surface of the core layer C facing towards the reflective display module D, surrounding or serving as outer layers of a stacked structure formed by the core layer C and the light guide blocks G. If an upper surface of the core layer C of the light guide film assembly facing oppositely away from the display panel D is bonded to a touch module with adhesive, then the first peripheral layer At is a touch barrier layer formed by the adhesive. If a filling material with a low refractive index is used to fill up spaces between the light guide blocks G to form a guide barrier layer so that a lower surface of the light guide film assembly is made flat, then the second peripheral layer Ab is formed by the filling material. If the light guide blocks G are exposed to air, then the second peripheral layer Ab is formed by the air.

As shown in FIG. 2, the light guide blocks G are arranged in a matrix with a preset density on a lower surface of the core layer C facing towards the reflective display module D. The light guide blocks G must have a structure and density that enable light rays of the incident light to be transmitted to the light guide blocks G, from the light guide blocks G to the second peripheral layer Ab, and then projected onto pixels of the reflective display module D to form pixel lights of correct grayscales. The pixel lights, after being reflected by the reflective display module D, are entirely transmitted out of the core layer C at a direction substantially perpendicular to the core layer C to enter a user's eyes.

According to one aspect of this embodiment, depending on three scenarios where the refractive index *n_{C}* of the core layer C is higher than, lower than, and equal to the refractive index *n_{G}* of the light guide blocks G, a structure of each of the light guide blocks G is designed, and a surface inclination angle of each slanted surface of each of the light guide blocks as well as a density of the light guide blocks G are selected, such that light rays of the incident light transmitting to the light guide blocks G do not undergo total internal reflection within the light guide blocks G but being directed out from side surfaces of the light guide blocks G (see FIGs. 3 and 4) and then projected onto the pixels of the reflective display module D to form pixel lights of correct grayscales. The pixel lights, after being reflected by the reflective display module D, can avoid being transmitted through the light guide blocks G and then being entirely transmitted out of the core layer C at a direction substantially perpendicular to the core layer C to enter the user's eyes.

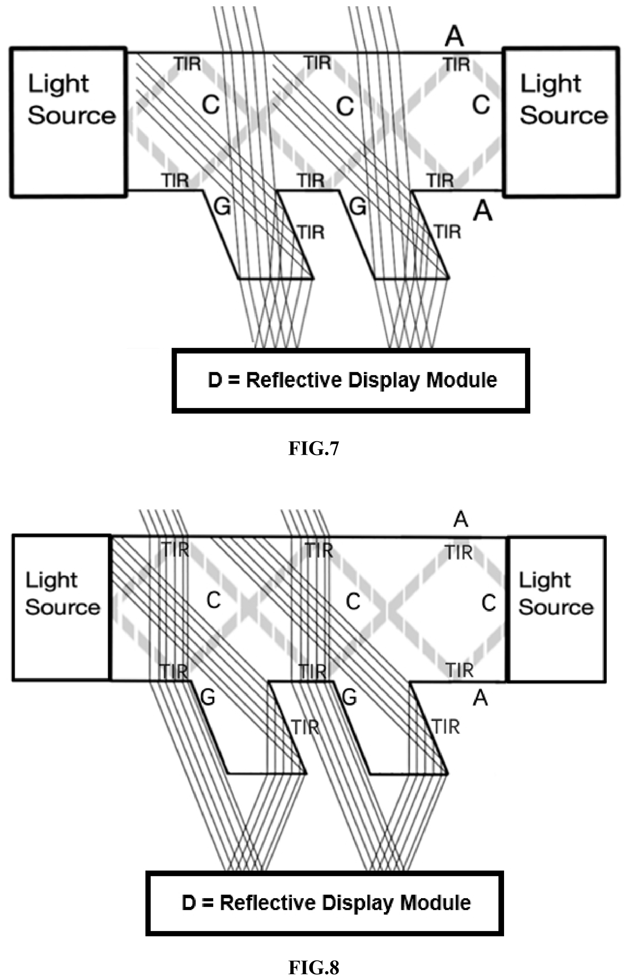

According to another alternative aspect of this embodiment, depending on three scenarios where the refractive index *n_{C}* of the core layer C is higher than, lower than, and equal to the refractive index *n_{G}* of the light guide blocks G, a structure of each of the light guide blocks G is designed, and a surface inclination angle of each slanted surface of each of the light guide blocks as well as a density of the light guide blocks G are selected, such that light rays of the incident light transmitting to the light guide blocks G undergo total internal reflection within the light guide blocks G and then being directed out from bottom surfaces of the light guide blocks G and then projected onto the pixels of the reflective display module D to form pixel lights of correct grayscales. The pixel lights, after being reflected by the reflective display module D, can all be reflected back to the light guide blocks G or can all avoid being reflected back to the light guide blocks G (see FIGs. 7 and 8), and then transmit out through the core layer C to the user's eyes.

According to one aspect of the present invention as shown in FIGs. 3 and 4, the structure and surface inclination angle of each slanted surface of each of the light guide blocks G as well as the density of the light guide blocks G are designed and selected according to the method steps as described in the following such that the light rays of the incident light do not undergo total internal reflection within the light guide blocks G but being directed out from side surfaces of the light guide blocks G and then projected onto the pixels of the reflective display module D to form pixel lights of correct grayscales, where the pixel lights, after being reflected by the reflective display module D, first avoid being transmitted through the light guide blocks G, and then entirely transmitted out of the core layer C at a direction substantially perpendicular to the core layer C to enter the user's eyes.

Step 1: utilizing a higher one of the refractive indices of the first peripheral layer At and the second peripheral layer Ab to calculate the critical angle *θ_{CA}* for total internal reflection within the core layer C, and utilizing the critical angle *θ_{CA}* to determine a range of angles of incidence *θ*_{*AC*1} by which an incident light entering the core layer C undergoes total internal reflection within the core layer C.

Known are the refractive index *n_{C}* of the core layer C, a refractive index *n_{At}* of the first peripheral layer At, and a refractive index *n_{Ab}* of the second peripheral layer Ab. To satisfy the condition for total internal reflection (TIR) of the incident light within the core layer C, when selecting a material for the core layer C, the refractive index *n_{C}* of the core layer C must be greater than the refractive index *n_{A}* of the peripheral layer A.

Since the larger the difference between the refractive index *n_{A}* of the peripheral layer A and the refractive index *n_{C}* of the core layer C, the smaller the critical angle *θ_{CA}* for total internal reflection, if the refractive indices *n_{At}* and *n_{Ab}* of the first peripheral layer At and the second peripheral layer Ab are not the same, and a lower one of the refractive indices *n_{At}* and *n_{Ab}* of the first peripheral layer At and the second peripheral layer Ab is used to calculate the critical angle *θ_{CA}* for total internal reflection within the core layer C, total internal reflection of the incident light will not occur on at least one side of the core layer C. Therefore, it is necessary to use the higher one of the refractive indices *n_{At}* and *n_{Ab}* of the first peripheral layer At and the second peripheral layer Ab to calculate the critical angle *θ_{CA}* for total internal reflection within the core layer C.

Step 2: Known are the refractive index *n_{G}* of the light guide blocks G, calculating a range of angles of incidence *θ*_{*CG*1} for light rays transmitting from the core layer C into the light guide blocks G using the formula for angle of transmission based on the range of angles of incidence *θ*_{*CA*1} calculated in Step 1; if the refractive index *n_{C}* of the core layer C is higher than the refractive index *n_{G}* of the light guide blocks G, the range of angles of incidence *θ*_{*CG*1} needs to be adjusted to be lower than the critical angle *θ_{CG}* and higher than the critical angle *θ_{CA}.*

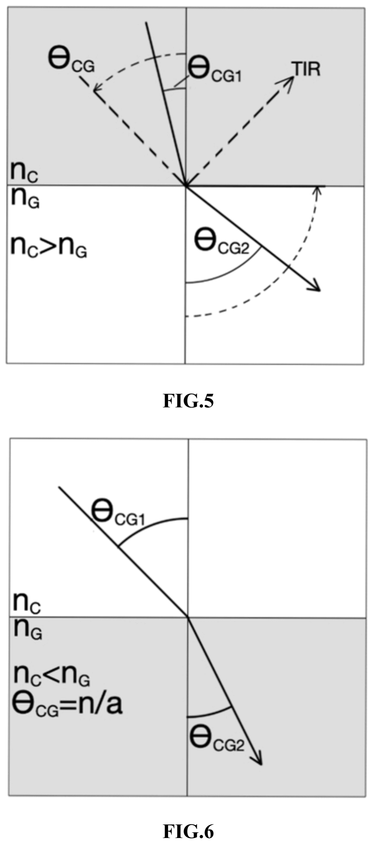

As shown in FIG. 5, the refractive index *n_{C}* of the core layer C is higher than the refractive index *n_{G}* of a light guide block G. If the angle of incidence *θ*_{*CG*1} of the incident light in the core layer C is greater than the critical angle *θ_{CG}* from the core layer C to the light guide block G, total internal reflection occurs within the core layer C, and a light ray of the incident light cannot be transmitted from the core layer C into the light guide block G. Therefore, the angle of incidence *θ*_{*CG*1} for the light ray of the incident light transmitting from the core layer C to the light guide block G must be lower than the critical angle *θ_{CG}* and higher than the critical angle *θ_{CA}.* Conversely, as in FIG. 6, if the refractive index *n_{C}* of the core layer C is lower than the refractive index *n_{G}* of the light guide block G, then the light ray propagating within the core layer C will be transmitted into the light guide block G when they reach the interface between the core layer C and the light guide block G. Known are the refractive index *n_{C}* of the core layer C, the refractive index *n_{G}* of the light guide blocks G, and the angle of incidence *θ*_{*CG*1} of each light ray of the incident light transmitting from the core layer C into the light guide blocks G, calculating the angle of transmission *θ*_{*CG*2} for a corresponding light ray transmitting from the core layer C into a respective light guide block G using the formula for angle of transmission.

Step 3: Based on the angle of transmission *θ*_{*CG*2} obtained in step 2 by using the formula for angle of transmission, calculating, for each of the light guide blocks, different angles of transmission θ_{GAb2} for the light ray transmitting into the second peripheral layer Ab from a respective light guide block through i number of different possible slanted surfaces of the respective light guide block ranging from a slanted surface having a minimal surface inclination angle *O_{face}* to a slanted surface having a maximum surface inclination angle *O_{face}*, and then selecting among said i number of different possible slanted surfaces a slanted surface that has an optimal surface inclination angle *O_{face}* to configure the light guide blocks, wherein said optimal surface inclination angle *O_{face}* is a surface inclination angle *O_{face}* that enables the light ray transmitted from the core layer C into the respective light guide block G to be guided to the pixels of the reflective display module D after being refracted without undergoing total internal reflection within the respective light guide block G, and enables the light ray subsequently reflected by the reflective display module D be reflected in a direction most parallel to a perpendicular direction with respect to the core layer C and will not be reflected back to the respective light guide block G; also adjusting the density of the light guide blocks G so that the light rays reflected by the reflective display module D can avoid transmitting through the light guide blocks G.

Step 3 specifically comprises the following steps:
Step 31: Said step of "calculating, for each of the light guide blocks, different angles of transmission θ_{GAb2} for the light ray transmitting into the second peripheral layer Ab from the respective light guide block through the i number of different possible slanted surfaces of the respective light guide block ranging from the slanted surface having the minimal surface inclination angle *O_{face}* to the slanted surface having the maximum surface inclination angle *O_{face}*" of step 3 comprises the following steps: let the slanted surface having the minimal surface inclination angle *O_{face}* be a slanted surface parallel to the lower surface of the core layer C, and let the slanted surface having the maximum surface inclination angle *O_{face}* be a slanted surface that is substantially perpendicular to the lower surface of the core layer C. If surface inclination angles *O_{face}* of all of said i number of different possible slanted surfaces of the respective light guide block are 0 degree, the respective light guide block G is understood to be a layer parallel to the lower surface of the core layer C. If the light guide block G is hemispherical, then the light guide block G possesses i number of different possible slanted surfaces with surface inclination angles *O_{face}* ranging from 0 degree to 90 degrees. Since each of the light guide blocks G may possess i number of different possible slanted surfaces having different surface inclination angles *O_{face}*, calculating, for each of said i number of different possible slanted surfaces of each of the light guide blocks G, an adjusted angle of incidence ${θ}_{GAb 1}^{′}$ from the respective light guide block G to the second peripheral layer Ab according to the following:
${θ}_{GAb 1}^{′} = {θ}_{GAb 1} - {θ}_{facei}$ (4)
wherein, *θ*_{*GAb*1} = *θ*_{*CG*2}, and *θ_{facei}* represents a surface inclination angle of an i^{th} possible slanted surface of the respective light guide block G;
then using the formula for angle of transmission to calculate an angle of transmission ${θ}_{GAb 2}^{′}$ of the light ray in the second peripheral layer Ab transmitted through that i^{th} slanted surface. Finally, adjust back to an angle of transmission θ_{GAb2} which is substantially perpendicular to the lower surface of the core layer C using formula (4), wherein ${θ}_{GAb 2} = {θ}_{GAb 2}^{′} + {θ}_{facei}$*.*

Said step of "selecting among said i number of different possible slanted surfaces a slanted surface that has the optimal surface inclination angle *O_{face}* to configure the light guide blocks, wherein said optimal surface inclination angle *O_{face}* is the surface inclination angle *O_{face}* that enables the light ray transmitted from the core layer C into the respective light guide block G to be guided to the pixels of the reflective display module D after being refracted without undergoing total internal reflection within the respective light guide block G" of step 3 comprises the following steps:

Since the light ray transmitted into each light guide block G, upon reaching a slanted surface of the light guide block G, is very likely to have an angle greater than the critical angle of the light ray transmitted from the light guide block G to the second peripheral layer Ab, the present invention needs to calculate a first range of surface inclination angles *O_{face}* that will cause total internal reflection within the light guide blocks G as a first category of surface inclination angles, and exclude said first range of surface inclination angles, so that a second range of surface inclination angles is obtained which will not cause total internal reflection within the light guide blocks G, and this second range of surface inclination angles is considered a second category of surface inclination angles. Because when total internal reflection (TIR) occurs within the light guide blocks G, the light rays will be refracted back to the core layer C, causing light loss, or it will be impossible to direct all the light rays to the corresponding pixels of the reflective display module D. Therefore, a purpose of this step is to obtain a range of surface inclination angles *O_{face}* that will cause TIR and if there is no TIR and the light ray is refracted into the second peripheral layer Ab, the angle of transmission θ_{GAb2}. Yet, it should be understood that although the second category of surface inclination angles will not cause total internal reflection, the second category of surface inclination angles does not guarantee that the light ray will always be refracted to the pixels of the reflective display module D, and so not all surface inclination angles from the second category of surface inclination angles are said optimal surface inclination angle.

Step 32: selecting from the second category of surface inclination angles a third category of surface inclination angles that does not only prevent total internal reflection within the light guide blocks G, but also enable light rays refracted by the light guide blocks to be projected onto the reflective display module D; and then selecting among the third category of surface inclination angles the optimal surface inclination angle that enables the light ray subsequently reflected by the reflective display module D be reflected in the direction most parallel to the perpendicular direction with respect to the core layer C and will not be reflected back to the respective light guide block G.

Step 33. Calculating the angle of transmission *θ*_{*AbC*2} for the light ray transmitting from the second peripheral layer Ab into the core layer C:
Configuring the light guide blocks G based on the optimal surface inclination angle; also, a height and a width of each of the light guide blocks G must also be configured such that the light rays transmitted from the core layer C into the light guide blocks G can be refracted out of the light guide blocks G and be guided to the pixels of the reflective display module D after being refracted without undergoing total internal reflection within the light guide blocks G.

The reflective display module D and the light guide blocks G may be separated by the second peripheral layer A2 or may be in direct contact. Calculating a position of the light ray at the core layer C as being subsequently reflected from the reflective display module D by using trigonometrical calculation based on a height between a position on the light guide block G where the light ray is refracted out of the light guide block G and a surface of the reflective display module D reflecting the light ray. Since the lower surface of the core layer C is planar, there is no need to adjust the angle of incidence. Use the formula for angle of transmission to calculate an angle of transmission *θ*_{*AbC*2} for the light ray transmitting from the second peripheral layer Ab into the core layer C. Because the refractive index of the core layer C is higher than that of the second peripheral layer Ab, the angle of transmission is smaller than the angle of incidence, which means the transmitted light is bent more towards the normal line, or in other words, the light entering the core layer C after being reflected by the reflective display module D becomes more parallel to the perpendicular direction of the core layer C.

Step 34: Using the formula for angle of transmission to calculate the angle of transmission for the reflected light in the core layer C to the first peripheral layer At, which is then used to calculate an angle which the pixel lights reach the user's eyes, ensuring that the light transmitted from the core layer C is transmitted into the first peripheral layer At at an angle of incidence most parallel to a perpendicular direction with respect to an upper surface of the core layer C.

Since the light transmitted from the core layer C is transmitted into the first peripheral layer At at an angle of incidence almost perpendicular to the upper surface of the core layer C, there is basically no interface reflection or light loss. Because the present invention has selected the optimal surface inclination angle in the light guide blocks G to guide lights, all angles of transmission from the core layer C to the first peripheral layer At adjacent the upper surface of the core layer C and from the first peripheral layer At to the user's eyes can be calculated using the formula for angle of transmission.

According to another alternative aspect of this embodiment as shown in FIGs. 7 and 8, the structure and surface inclination angle of each slanted surface of each of the light guide blocks G as well as the density of the light guide blocks G are designed and selected according to the method steps as described in the following such that the light ray entering each light guide block G undergoes total internal reflection on an inner side surface of the light guide block G and is directed out from a bottom surface of the light guide block G, and then projected onto the pixels of the reflective display module D to form pixel lights of the correct grayscales, wherein the pixel lights, after being reflected by the reflective display module D, can entirely enter back into the light guide block G or entirely avoid the light guide block G, and then be transmitted out through the core layer C to enter the user's eyes.

Step 1: Known are the refractive index *n_{C}* of the core layer C, the refractive index *n_{G}* of each of the light guide blocks G, a refractive index *n_{At}* of the first peripheral layer At, and a refractive index *n_{Ab}* of the second peripheral layer Ab, utilizing a higher one of the refractive indices of the first peripheral layer At and the second peripheral layer Ab to calculate the critical angle *θ_{CA}* for total internal reflection within the core layer C, and utilizing the critical angle *θ_{CA}* to determine a range of angles of incidence *θ*_{*AC*1} by which an incident light entering the core layer C undergoes total internal reflection within the core layer C.

Step 2: Based on the range of angles of incidence *θ*_{*CA*1} obtained from Step 1, if the refractive indices of the core layer C and the light guide blocks G are different, calculate a range of angles of incidence *θ*_{*CG*1} for light transmitting from the core layer C into the light guide block G using the formula for angle of transmission; if the refractive indices of the core layer C and the light guide block G are equal, then ${θ}_{AC 1} = {θ}_{AC 2} = {θ}_{CG 1} = {θ}_{CG 2} = {θ}_{GAb 1} .$

Step 3: Given the bottom surface of each of the light guide blocks G is parallel to the lower surface of the core layer C, calculating, for each of the light guide blocks, different angles of transmission θ_{GAb2} for the light ray transmitting into the second peripheral layer Ab from a respective light guide block through i number of other different possible slanted surfaces of the respective light guide block apart from the bottom surface of the respective light guide block, where said i number of other different possible slanted surfaces range from a slanted surface having a minimal surface inclination angle *O_{face}* to a slanted surface having a maximum surface inclination angle *O_{face}*, and then selecting among said i number of other different possible slanted surfaces a slanted surface that has an optimal surface inclination angle *O_{face}* to configure the light guide blocks, wherein said optimal surface inclination angle *O_{face}* is a surface inclination angle *O_{face}* that enables the light ray transmitted from the core layer C into the respective light guide block G to first undergo total internal reflection on said slanted surface that has the optimal surface inclination angle, and then be refracted by the bottom surface of the respective light guide block to the pixels of the reflective display module D, and enables the light ray subsequently reflected by the reflective display module D be reflected in a direction most parallel to a perpendicular direction with respect to the core layer C and will not be reflected back to the respective light guide block G, wherein the light ray subsequently reflected by the reflective display module D reflected into the core layer C without reflecting back to the respective light guide block G will be eventually refracted into the first peripheral layer At; also adjusting the density of the light guide blocks G so that the light rays reflected by the reflective display module D can entirely enter back into the light guide blocks G or entirely avoid the light guide blocks G.

Step 3 specifically comprises the following steps:
Step 31: Said step of "calculating, for each of the light guide blocks, different angles of transmission θ_{GAb2} for the light ray transmitting into the second peripheral layer Ab from a respective light guide block through i number of other different possible slanted surfaces of the respective light guide block apart from the bottom surface of the respective light guide block, where said i number of other different possible slanted surfaces range from a slanted surface having a minimal surface inclination angle *O_{face}* to a slanted surface having a maximum surface inclination angle *O_{face}*" of step 3 comprises the following steps: let the slanted surface having the minimal surface inclination angle *O_{face}* be a slanted surface parallel to the lower surface of the core layer C, and let the slanted surface having the maximum surface inclination angle *O_{face}* be a slanted surface that is substantially perpendicular to the lower surface of the core layer C; selecting slanted surface inclination angles *O_{face}* ranging from 45 degrees to 180 degrees; calculating among selected slanted surface inclination angles *O_{face}* ranging from 45 degrees to 180 degrees a range of slanted surface inclination angles that will cause total internal reflection as a fourth category of surface inclination angles;
Known are the range of angles of incidence *θ*_{*AC*1} and the fourth category of surface inclination angles, calculating the angle of transmission *θ*_{*CG*2} by using the formula for angle of transmission; also calculating, for each of said i number of other different possible slanted surfaces of each of the light guide blocks G apart from the bottom surface thereof, an adjusted angle of incidence ${θ}_{GAb 1}^{′}$ from each of the light guide blocks G to the second peripheral layer Ab according to the following:
   ${θ}_{Gab 1}^{′} = {θ}_{GAb 1} - {θ}_{facei}$ (4)
wherein, *θ*_{*GAb*1} = *θ*_{*CG*2}, and *θ_{facei}* represents a surface inclination angle of an i^{th} possible slanted surface of the respective light guide block G;
then using the formula for angle of transmission to calculate an angle of transmission ${θ}_{GAb 2}^{′}$ of the light ray in the second peripheral layer Ab transmitted through the bottom surface of the respective light guide block G. Finally, adjust back to an angle of transmission θ_{GAb2} which is substantially perpendicular to the lower surface of the core layer C using formula (4), wherein ${θ}_{GAb 2} = {θ}_{GAb 2}^{′} + {θ}_{facei}$*.*

Since the bottom surface of the light guide block G is parallel to the lower surface of the core layer C, instead of adjusting a slanted surface inclination angle, formula (4) is directly used to calculate the transmission angle θ_{GAb2} into the second peripheral layer Ab.

Step 32: selecting from the fourth category of surface inclination angles obtained from Step 31 a fifth category of surface inclination angles that does not only enable total internal reflection within the light guide blocks G, but also enable light rays refracted from bottom surfaces of the light guide blocks G be projected onto the reflective display module D; and then selecting among the fifth category of surface inclination angles the optimal surface inclination angle that enables the light rays subsequently reflected by the reflective display module D be reflected in the direction most parallel to the perpendicular direction with respect to the core layer C and will not be reflected back to the light guide blocks G; wherein the light ray subsequently reflected by the reflective display module D reflected into the core layer C without reflecting back to the light guide blocks G will be eventually refracted into the first peripheral layer At.

Step 33: Calculating the angle of transmission *θ*_{*AbC*2} for the light ray transmitting from the second peripheral layer Ab directly into the core layer C, or from the second peripheral layer Ab into the core layer after passing through the respective light guide block:
Configuring the light guide blocks G based on the optimal surface inclination angle; also, a height and a width of each of the light guide blocks G must also be configured such that the light rays transmitted from the core layer C into the light guide blocks G can be reflected by the light guide blocks G due to total internal reflection and be guided to the pixels of the reflective display module D through the bottom surfaces of the light guide blocks G;

Calculating a position of the light ray at the core layer C directly reflected by the reflective display module or reflected from the reflective display module and passing through the respective light guide block by using trigonometrical calculation based on a height between a position on the light guide block G where the light ray is reflected by the light guide block G and a surface of the reflective display module D reflecting the light ray; using the formula for angle of transmission to calculate angles of transmission for the light ray transmitting from the second peripheral layer Ab directly into the core layer C (*θ*_{*AbC*2}) or into the core layer C after passing through the respective light guide block G (an angle of transmission *θ*_{*AbG*2}, which is also an angle of incidence *θ*_{GC1}, and an angle of transmission *θ*_{*GC*2}*).*

Step 34: Using the formula for angle of transmission to calculate the angle of transmission for the reflected light in the core layer C to the first peripheral layer At, which is then used to calculate an angle which the pixel lights reach the user's eyes, ensuring that the light transmitted from the core layer C is transmitted into the first peripheral layer At at an angle of incidence most parallel to a perpendicular direction with respect to an upper surface of the core layer C.

### Embodiment 2

Embodiment 2 of the present invention provides a front light module, comprising: a light source and the light guide film assembly as described in Embodiment 1. The light source is disposed at a light-incident surface of the light guide film assembly. The light from the light source enters the core layer of the light guide film assembly from said light-incident surface.

### Embodiment 3

Embodiment 3 of the present invention provides a reflective display device, comprising: a reflective display module and the front light module as described in Embodiment Two. The front light module is disposed on an outer side of a display surface of said reflective display module, and the light guide blocks G face towards the reflective display module.

The specific embodiments described above have further explained the object, technical solution, and beneficial effects of the present invention in detail. It should be understood that the foregoing are only specific embodiments of the present invention and are not intended to limit the protection scope of the present invention. Any modification, equivalent replacement, improvement, etc., made within the spirit and principles of the present invention should be included within the protection scope of the present invention.

## Claims

1. A light guide film assembly, comprising a core layer, light guide blocks, and a peripheral layer; a refractive index *n_{C}* of the core layer is higher than a refractive index *n_{A}* of the peripheral layer; an angle of an incident light comprising a plurality of light rays propagating within the core layer, which is an angle of incidence *θ*_{*CA*1} of the incident light transmitting from the core layer to the peripheral layer, exceeds a critical angle *θ_{CA}* of the incident light transmitting from the core layer to the peripheral layer, such that the incident light propagating within the core layer undergoes total internal reflection within the core layer, and the core layer acts as a transmission medium to propagate the incident light away from where the incident light comes from, while during propagation, if the incident light is transmitted from the core layer to an interface between any one of the light guide blocks and the core layer, the incident light propagates into that light guide block through the interface, and if not transmitted to said interface, the incident light continues to propagate within the core layer due to said total internal reflection; the peripheral layer is formed by sub-layers comprising a first peripheral layer on a surface of the core layer facing oppositely away from a reflective display module, and a second peripheral layer on a surface of the core layer facing towards the reflective display module; the peripheral layer surrounds or serving as outer layers of a stacked structure formed by the core layer and the light guide blocks;
the light guide blocks are arranged in a matrix with a preset density on a lower surface of the core layer facing towards the reflective display module; the light guide blocks have a structure and density that enable the incident light to be refracted to the light guide blocks, from the light guide blocks to the second peripheral layer, and then projected onto pixels of the reflective display module to form pixel lights of correct grayscales; the pixel lights, after being reflected by the reflective display module, are entirely transmitted out of the core layer at a direction perpendicular or almost perpendicular to the core layer to enter a user's eyes;
depending on three scenarios where the refractive index *n_{C}* of the core layer is higher than, lower than, and equal to a refractive index *n_{G}* of the light guide blocks, the structure of the light guide blocks is designed, and a surface inclination angle of each slanted surface of each of the light guide blocks as well as a density of the light guide blocks are selected, such that the incident light refracted to the light guide blocks from the core layer do not undergo total internal reflection within the light guide blocks but being refracted out from side surfaces of the light guide blocks and then projected onto the pixels of the reflective display module to form the pixel lights of correct grayscales, and the pixel lights, after being reflected by the reflective display module, avoid being transmitted through the light guide blocks and then being entirely transmitted out of the core layer at a direction perpendicular or almost perpendicular to the core layer to enter the user's eyes.

2. The light guide film assembly of claim 1, wherein the structure of the light guide blocks are designed according to the following steps:
Step 1: known are the refractive index *n_{C}* of the core layer, the refractive index *n_{G}* of the light guide blocks, a refractive index *n_{At}* of the first peripheral layer, and a refractive index *n_{Ab}* of the second peripheral layer; using a higher one of the refractive index *n_{At}* and the refractive index *n_{Ab}* to calculate the critical angle *θ_{CA}* for total internal reflection within the core layer, and utilizing the critical angle *θ_{CA}* to determine a range of angles of incidence *θ*_{*AC*1} by which the incident light entering the core layer undergoes total internal reflection within the core layer;
Step 2: calculating a range of angles of incidence *θ*_{*CG*1} for the incident light transmitting from the core layer into the light guide blocks using a formula for angle of transmission ${θ}_{2} = {sin}^{- 1} \left(\frac{{n}_{1}}{{n}_{2}}sin {θ}_{1}\right)$ based on the range of angles of incidence *θ*_{*AC*1} calculated in Step 1; if the refractive index *n_{C}* of the core layer is higher than the refractive index *n_{G}* of the light guide blocks, the range of angles of incidence *θ*_{*CG*1} has to be adjusted to be lower than a critical angle *θ_{CG}* and higher than the critical angle *θ_{CA};*
Step 3: calculating an angle of transmission *θ*_{*CG*2} based on the range of angles of incidence *θ*_{*CG*1} obtained in step 2 by using the formula for angle of transmission, calculating, for each of the light guide blocks, different angles of transmission θ_{GAb2} for the light rays transmitting into the second peripheral layer from a respective light guide block through i number of different possible slanted surfaces of the respective light guide block ranging from a slanted surface having a minimal surface inclination angle *O_{face}* to a slanted surface having a maximum surface inclination angle *O_{face}*, and then selecting among said i number of different possible slanted surfaces a slanted surface that has an optimal surface inclination angle *O_{face}* to configure the light guide blocks, wherein said optimal surface inclination angle *O_{face}* is a surface inclination angle *O_{face}* that enables the light rays transmitted from the core layer into the respective light guide block to be guided to the pixels of the reflective display module after being refracted without undergoing total internal reflection within the respective light guide block, and enables the light rays subsequently reflected by the reflective display module be reflected in a direction most parallel to a perpendicular direction with respect to the core layer and are not reflected back to the respective light guide block; also adjusting the density of the light guide blocks so that the light rays reflected by the reflective display module avoid transmitting through the light guide blocks; also, configuring a height and a width of each of the light guide blocks such that the light rays transmitted from the core layer into the light guide blocks are refracted out of the light guide blocks and projected to the pixels of the reflective display module after being refracted by the light guide blocks without undergoing total internal reflection within the light guide blocks.

3. The light guide film assembly of claim 2, wherein Step 3 specifically comprises the following steps:
Step 31: Said step of "calculating, for each of the light guide blocks, different angles of transmission θ_{GAb2} for the light rays transmitting into the second peripheral layer from the respective light guide block through said i number of different possible slanted surfaces of the respective light guide block ranging from the slanted surface having the minimal surface inclination angle *O_{face}* to the slanted surface having the maximum surface inclination angle *O_{face}*" of step 3 comprises the following steps: let the slanted surface having the minimal surface inclination angle *O_{face}* be a slanted surface parallel to the lower surface of the core layer, and let the slanted surface having the maximum surface inclination angle *O_{face}* be a slanted surface that is perpendicular to the lower surface of the core layer, so that surface inclination angles *O_{face}* of said i number of different possible slanted surfaces of the respective light guide block range from 0 degree to 90 degrees; calculating, for each of said i number of different possible slanted surfaces of each of the light guide blocks G, an adjusted angle of incidence ${θ}_{GAb 1}^{′}$ from the respective light guide block G to the second peripheral layer Ab according to the following: ${θ}_{GAb 1}^{′} = {θ}_{GAb 1} - {θ}_{facei}$ (4) wherein, *θ*_{*GAb*1} = *θ*_{*CG*2} , and *θ_{facei}* represents a surface inclination angle of an i^{th} possible slanted surface of the respective light guide block G; then using the formula for angle of transmission to calculate an angle of transmission ${θ}_{GAb 2}^{′}$ of the light rays in the second peripheral layer Ab transmitted through that i^{th} possible slanted surface; lastly, adjusting ${θ}_{GAb 2}^{′}$ back to an angle of transmission θ_{GAb2} which is perpendicular to the lower surface of the core layer using formula (4), wherein ${θ}_{GAb 2} = {θ}_{GAb 2}^{′} + {θ}_{facei}$;
said step of "selecting among said i number of different possible slanted surfaces the slanted surface that has an optimal surface inclination angle *O_{face}* to configure the light guide blocks, wherein said optimal surface inclination angle *O_{face}* is the surface inclination angle *O_{face}* that enables the light rays transmitted from the core layer into the respective light guide block to be guided to the pixels of the reflective display module after being refracted without undergoing total internal reflection within the respective light guide block" of step 3 comprises the following steps:
calculating a first range of surface inclination angles *O_{face}* that causes total internal reflection within the respective light guide block as a first category of surface inclination angles, and exclude said first range of surface inclination angles, so that a second range of surface inclination angles is obtained which does not cause total internal reflection within the respective light guide block, and this second range of surface inclination angles is considered a second category of surface inclination angles;
Step 32: selecting from the second category of surface inclination angles a third category of surface inclination angles that does not only prevent total internal reflection within the respective light guide block, but also enable the light rays refracted by the respective light guide block to be projected onto the reflective display module; and then selecting among the third category of surface inclination angles the optimal surface inclination angle that enables the light rays subsequently reflected by the reflective display module be reflected in the direction most parallel to the perpendicular direction with respect to the core layer and not being reflected back to the respective light guide block;
Step 33: calculating an angle of transmission *θ*_{*AbC*2} for the light rays transmitting from the second peripheral layer into the core layer:
calculating a position of each of the light rays at the core layer as being subsequently reflected from the reflective display module by using trigonometrical calculation based on a height between a position on the light guide block where the light ray is refracted out of the light guide block and a surface of the reflective display module reflecting the light ray; using the formula for angle of transmission to calculate the angle of transmission *θ*_{*AbC*2} for each of the light rays transmitting from the second peripheral layer into the core layer;
Step 34: using the formula for angle of transmission to calculate an angle of transmission for the light rays transmitting to the first peripheral layer from the core layer, and such angle of transmission for the light rays transmitting to the first peripheral layer from the core layer as obtained is then used to calculate an angle which the pixel lights reflected by the reflective display module reach the user's eyes, ensuring that the light rays transmitted from the core layer is transmitted into the first peripheral layer at an angle of incidence most parallel to a perpendicular direction with respect to an upper surface of the core layer.

4. A light guide film assembly, comprising a core layer, light guide blocks, and a peripheral layer; a refractive index *n_{C}* of the core layer is higher than a refractive index *n_{A}* of the peripheral layer; an angle of an incident light comprising a plurality of light rays propagating within the core layer, which is an angle of incidence *θ*_{*CA*1} of the incident light transmitting from the core layer to the peripheral layer, exceeds a critical angle *θ_{CA}* of the incident light transmitting from the core layer to the peripheral layer, such that the incident light propagating within the core layer undergoes total internal reflection within the core layer, and the core layer acts as a transmission medium to propagate the incident light away from where the incident light comes from, while during propagation, if the incident light is transmitted from the core layer to an interface between any one of the light guide blocks and the core layer, the incident light propagates into that light guide block through the interface, and if not transmitted to said interface, the incident light continues to propagate within the core layer due to said total internal reflection; the peripheral layer is formed by sub-layers comprising a first peripheral layer on an upper surface of the core layer facing oppositely away from a reflective display module, and a second peripheral layer on a lower surface of the core layer facing towards the reflective display module; the peripheral layer surrounds or serving as outer layers of a stacked structure formed by the core layer and the light guide blocks;
the light guide blocks are arranged in a matrix with a preset density on a lower surface of the core layer facing towards the reflective display module; the light guide blocks have a structure and density that enable the incident light to be refracted to the light guide blocks, from the light guide blocks to the second peripheral layer, and then projected onto pixels of the reflective display module to form pixel lights of correct grayscales; the pixel lights, after being reflected by the reflective display module, are entirely transmitted out of the core layer at a direction perpendicular or almost perpendicular to the core layer to enter a user's eyes;
depending on three scenarios where the refractive index *n_{C}* of the core layer is higher than, lower than, and equal to a refractive index *n_{G}* of the light guide blocks, a structure of the light guide blocks is designed, and a surface inclination angle of each slanted surface of each of the light guide blocks as well as a density of the light guide blocks are selected, such that the light rays of the incident light transmitting to the light guide blocks undergo total internal reflection within the light guide blocks and then being directed out from bottom surfaces of the light guide blocks and then projected onto pixels of the reflective display module to form pixel lights of correct grayscales; all the pixel lights, after being reflected by the reflective display module, are reflected back to the light guide blocks or avoid being reflected back to the light guide blocks, and then transmit out through the core layer to a user's eyes.

5. The light guide film assembly of claim 4, wherein the structure of the light guide blocks are designed according to the following steps:
Step 1: known are the refractive index *n_{C}* of the core layer, the refractive index *n_{G}* of the light guide blocks, a refractive index *n_{At}* of the first peripheral layer, and a refractive index *n_{Ab}* of the second peripheral layer, utilizing a higher one of the refractive index *n_{At}* and the refractive index *n_{Ab}* to calculate the critical angle *θ_{CA}* for total internal reflection within the core layer, and utilizing the critical angle *θ_{CA}* to determine a range of angles of incidence *θ*_{*AC*1} by which the incident light entering the core layer undergoes total internal reflection within the core layer;
Step 2: based on the range of angles of incidence *θ*_{*AC*1} obtained from Step 1, if the refractive index *n_{C}* of the core layer and the refractive index *n_{G}* of the light guide blocks are different, calculate a range of angles of incidence *θ*_{*CG*1} for the incident light transmitting from the core layer into the light guide block using a formula for angle of transmission ${θ}_{2} = {sin}^{- 1} \left(\frac{{n}_{1}}{{n}_{2}}sin {θ}_{1}\right)$; if the refractive index *n_{C}* of the core layer and the refractive index *n_{G}* of the light guide blocks are equal, then ${θ}_{AC 1} = {θ}_{AC 2} = {θ}_{CG 1} = {θ}_{CG 2} = {θ}_{GAb 1} ;$
Step 3: given the bottom surfaces of the light guide blocks are parallel to the lower surface of the core layer, calculating, for each of the light guide blocks, different angles of transmission θ_{GAb2} for the light rays transmitting into the second peripheral layer from a respective light guide block through i number of other different possible slanted surfaces of the respective light guide block apart from a bottom surface of the respective light guide block, where said i number of other different possible slanted surfaces range from a slanted surface having a minimal surface inclination angle *O_{face}* to a slanted surface having a maximum surface inclination angle *O_{face}*, and then selecting among said i number of other different possible slanted surfaces a slanted surface that has an optimal surface inclination angle *O_{face}* to configure the light guide blocks, wherein said optimal surface inclination angle *O_{face}* is a surface inclination angle *O_{face}* that enables the light rays transmitted from the core layer into the respective light guide block to first undergo total internal reflection on said slanted surface that has the optimal surface inclination angle, and then be refracted by the bottom surface of the respective light guide block to the pixels of the reflective display module, and enables the light rays subsequently reflected by the reflective display module be reflected in a direction most parallel to a perpendicular direction with respect to the core layer and not being reflected back to the respective light guide block, wherein the light rays subsequently reflected by the reflective display module into the core layer without reflecting back to the respective light guide block are eventually refracted into the first peripheral layer; also adjusting the density of the light guide blocks so that the light rays reflected by the reflective display module entirely enter back into the light guide blocks or entirely avoid the light guide blocks.

6. The light guide film assembly of claim 5, wherein said Step 3 comprises the following steps:
Step 31: said step of "calculating, for each of the light guide blocks, different angles of transmission θ_{GAb2} for the light rays transmitting into the second peripheral layer from the respective light guide block through said i number of other different possible slanted surfaces of the respective light guide block apart from the bottom surface of the respective light guide block, where said i number of other different possible slanted surfaces range from the slanted surface having the minimal surface inclination angle *O_{face}* to the slanted surface having the maximum surface inclination angle *O_{face}*" of step 3 comprises the following steps: let the slanted surface having the minimal surface inclination angle *O_{face}* be a slanted surface parallel to the lower surface of the core layer, and let the slanted surface having the maximum surface inclination angle *O_{face}* be a slanted surface that is substantially perpendicular to the lower surface of the core layer; selecting slanted surface inclination angles *O_{face}* ranging from 45 degrees to 180 degrees; calculating among selected slanted surface inclination angles *O_{face}* ranging from 45 degrees to 180 degrees a range of slanted surface inclination angles that causes total internal reflection within the respective light guide block as a fourth category of surface inclination angles;
known are the range of angles of incidence *θ*_{*AC*1} and the fourth category of surface inclination angles, calculating an angle of transmission *θ*_{*CG*2} by using the formula for angle of transmission; also calculating, for each of said i number of other different possible slanted surfaces of each of the light guide blocks apart from the bottom surface thereof, an adjusted angle of incidence ${θ}_{GAb 1}^{′}$ from each of the light guide blocks to the second peripheral layer according to the following: ${θ}_{GAb 1}^{′} = {θ}_{GAb 1} - {θ}_{facei}$ (4)
wherein, *θ*_{*GAb*1} = *θ*_{*CG*2}, and *θ_{facei}* represents a surface inclination angle of an i^{th} possible slanted surface of the respective light guide block; then using the formula for angle of transmission to calculate an angle of transmission ${θ}_{GAb 2}^{′}$ of the light rays in the second peripheral layer transmitted through the bottom surface of the respective light guide block; lastly, adjusting ${θ}_{GAb 2}^{′}$ back to an angle of transmission θ_{GAb2} which is substantially perpendicular to the lower surface of the core layer C using formula (4), wherein ${θ}_{GAb 2} = {θ}_{GAb 2}^{′} + {θ}_{facei}$;
since the bottom surface of the respective light guide block is parallel to the lower surface of the core layer, instead of adjusting a slanted surface inclination angle, formula (4) is directly used to calculate the angle of transmission θ_{GAb2} from the respective light guide block into the second peripheral layer;
Step 32: selecting from the fourth category of surface inclination angles obtained from Step 31 a fifth category of surface inclination angles that does not only enable total internal reflection within the light guide blocks, but also enable light rays refracted from bottom surfaces of the light guide blocks be projected onto the reflective display module; and then selecting among the fifth category of surface inclination angles the optimal surface inclination angle that enables the light rays subsequently reflected by the reflective display module be reflected in the direction most parallel to the perpendicular direction with respect to the core layer and not being reflected back to the light guide blocks; wherein the light rays subsequently reflected by the reflective display module into the core layer without reflecting back to the light guide blocks are eventually refracted into the first peripheral layer;
Step 33: calculating an angle of transmission *θ*_{*AbC*2} for the light rays transmitting from the second peripheral layer directly into the core layer, or from the second peripheral layer into the core layer after passing through the respective light guide block:
configuring the light guide blocks based on the optimal surface inclination angle; also, a height and a width of each of the light guide blocks are configured such that the incident light transmitted from the core layer into the light guide blocks is reflected by the light guide blocks due to total internal reflection and be guided to the pixels of the reflective display module through the bottom surfaces of the light guide blocks;
calculating a position of each of the light rays at the core layer directly reflected by the reflective display module or reflected by the reflective display module and passing through the respective light guide block by using trigonometrical calculation based on a height between a position on the respective light guide block where the light ray is reflected by the respective light guide block and a surface of the reflective display module reflecting the light ray; using the formula for angle of transmission to calculate an angle of transmission *θ*_{*AbC*2} for the light ray transmitting from the second peripheral layer directly into the core layer or angles of transmission for the light ray transmitting from the second peripheral layer into the core layer after passing through the respective light guide block, including an angle of transmission *θ*_{*AbG*2}*,* which is also an angle of incidence *θ*_{*GC*1}, and also an angle of transmission *θ*_{*GC*2}*;*
Step 34: using the formula for angle of transmission to calculate an angle of transmission for the light rays transmitting to the first peripheral layer from the core layer, and such angle of transmission for the light rays transmitting to the first peripheral layer from the core layer as obtained is then used to calculate an angle which the pixel lights reflected by the reflective display module reach the user's eyes, ensuring that the light rays transmitted from the core layer is transmitted into the first peripheral layer at an angle of incidence most parallel to a perpendicular direction with respect to an upper surface of the core layer.

7. A front light module, comprising: a light source and the light guide film assembly of any one of claims 1 to 6; the light source is disposed at a light-incident surface of the light guide film assembly; the incident light from the light source enters the core layer of the light guide film assembly from said light-incident surface.

8. A reflective display device, comprising: a reflective display module and the front light module of claim 7; the front light module is disposed on an outer side of a display surface of said reflective display module, and the light guide blocks face towards the reflective display module.
